# EUROPÄISCHE PATENTSCHRIFT

(11) **EP 2 365 033 B1**
(45) Veröffentlichungstag und Bekanntmachung des Hinweises auf die Patenterteilung: **10.07.2013**
(21) Anmeldenummer: 10002658.2
(22) Anmeldetag: 12.03.2010
(51) Int. Cl.: C08L 77/06, B32B 1/08, B32B 27/32, B32B 27/34, C08L 51/06

(54) **Schlagzähmodifizierte Polyamidformmasse sowie hieraus gebildeter Behälter**
Impact-resistant modified polyamide moulding material and container made of same
Composition de moulage en polyamide modifiée pour améliorer la résilience aux chocs et récipient fabriqué à partir de celle-ci

(43) Veröffentlichungstag der Anmeldung: 14.09.2011
(73) Patentinhaber: EMS-PATENT AG, 7013 Domat / Ems (CH)
(72) Erfinder: Pfleghar, Mark Dipl.-Ing, 7013 Domat/Ems (CH); Zaschke, Gerhard Dipl.-Ing, 7402 Bonaduz (CH); Treutlein, Roland Dipl.-Ing, 92712 Pirk (DE); Presenz, Ulrich Dr. rer. nat., 7014 Trin (CH)
(74) Vertreter: Pfenning, Meinig & Partner GbR

(56) Entgegenhaltungen:
- EP-A1- 1 475 403
- EP-A1- 1 548 059
- EP-A1- 1 752 492
- EP-A1- 2 082 861

## Beschreibung

Die vorliegende Erfindung betrifft eine schlagzähmodifizierte Polyamidformmasse, die insbesondere zur Herstellung von Behältern mit guter SauerstoffBarriere und Kälteschlagzähigkeit geeignet ist. Ferner betrifft die vorliegende Erfindung Behälter, die aus der thermoplastischen Polyamidformmasse hergestellt sind. Insbesondere lassen sich aus der erfindungsgemäßen Polyamidformmasse Aufbewahrungs- bzw. Transportbehälter für Industriechemikalien, Agrochemikalien, die Kosmetikindustrie, Pharmaindustrie, oder Lebensmittelindustrie herstellen.

Modifizierte Polyamidformmassen, die zur Herstellung von Behältnissen geeignet sind, sind bereits aus dem Stand der Technik bekannt. So betrifft die EP 1 752 492 eine thermoplastische Treibstoffbarriereharz-Zusammensetzung, die neben einem Polyamid, einem modifizierten Polyolefin bzw. einem Styrol-Copolymer im Wesentlichen aus einem Polyolefin besteht.

EP 1 942 296 offenbart eine mehrschichtige Hydraulikleitung mit einer Schicht aus einem Blend aus Polyamid 610 als Hauptkomponente, einem amorphen oder mikrokristallinen Polyamid auf Basis von MXDA oder PXDA und einem Schlagzähmodifikator.

Der große Gehalt an Polyolefinen bzw. am Polyamid 610 in derartigen Harz-Zusammensetzungen bedingt allerdings eine geringe Sauerstoffbarriere und wirkt sich, im Falle des Polyolefins, zudem nachteilig auf die Kerbschlagzähigkeit und das Ergebnis des Gelboflex-Tests der Harze aus.

Insofern ist es Aufgabe der vorliegenden Erfindung, eine Polyamid-Zusammensetzung bereitzustellen, die exzellente Sauerstoffbarriere-Eigenschaften aufweist und gute mechanische Eigenschaften besitzt.

Diese Aufgabe wird bezüglich der Formmasse mit den Merkmalen des Patentanspruches 1 gelöst. Ferner wird erfindungsgemäß ein Behälter angegeben, dessen Merkmale in Patentanspruch 9 wiedergegeben sind. Mit Patentanspruch 14 werden Verwendungsmöglichkeiten der erfindungsgemäßen Behälter angegeben.

Erfindungsgemäß wird somit eine thermoplastische Polyamidformmasse bereitgestellt, die
a) 71 bis 89 Gew.-% eines Copolyamids MXD6/MXDI, wobei der molare Anteil an Isophthalsäure, bezogen auf die Gesamtheit der Disäuren Isophthalsäure und Adipinsäure 1 bis 30 mol-% beträgt,
b) 11 bis 29 Gew.-% mindestens eines säuremodifizierten Copolyolefin-Elastomeren oder mindestens eines säuremodifizierten Blends mehrer Copolyolefin-Elastomerer, sowie
c) 0 bis 8 Gew.-% Zusatzstoffe enthält,
wobei neben den Copolymeren a) und b) keine weiteren Polymere und/oder Copolymere enthalten sind und die Komponenten a) bis c) sich zu 100 Gew.-% addieren.

Die erfindungsgemäße Polyamidformmasse besteht somit im Wesentlichen aus einer Copolyamid-MXD6/MXDI-Matrix, in die ein säuremodifiziertes Copolyolefin-Elastomer bzw. ein Blend aus mehreren Copolyolefin-Elastomeren eincompoundiert ist. Unter den Zusatzstoffen werden erfindungsgemäß keine weiteren Polymere verstanden.

Bei der erfindungsgemäßen Polyamidformmasse handelt es sich um eine schlagzähmodifizierte Polyamidformmasse zur Herstellung von kälteschlagzähen Behältern mit ausgezeichneter Sauerstoffbarriere.

Überraschenderweise konnte gezeigt werden, dass die erfindungsgemäße Polyamidformmasse eine niedrige Wasserdampfdurchlässigkeit und hohe Lösungsmittelbarriere, z.B. gegenüber N-Methylpyrrolidon, Dimethylsulfoxid oder Xylol aufweist.

Zudem wurde überraschenderweise gefunden, dass das Barrierematerial trotz der Modifikation mit dem Copolyolefin-Elastomer, das an sich eine schlechte Sauerstoffbarriere aufweist, seine Barrierewirkung nahezu unverändert beibehält und dass zudem daraus hergestellte Behälter den Falltest aus mindestens 1,8 m Höhe bestehen, also auch exzellente mechanische Stabilität zeigen.

Zur Herstellung der Polyamidformmasse wird das modifizierte Copolyolefin-Elastomere mit dem Copolyamid zu einem Dryblend gemischt. Dieses Dryblend kann entweder zur weiteren Homogenisierung extrudiert und danach verarbeitet oder direkt verarbeitet werden. Bevorzugt wird das Dryblend erst extrudiert und dann verarbeitet.

Unter dem säuremodifizierten Blend mehrer Copolyolefin-Elastomerer ist eine Mischung aus den Komponenten Ethylen-Propylen-Copolymer, Ethylen-But-1-en-Copolymer, Propylen-But-1-en-Copolymer, Polyethylen und/oder Polypropylen zu verstehen. Die Mischung wird in der Schmelze homogenisiert, dabei erfolgt auch die Säuremodifikation durch Pfropfung, so dass der Modifizierungsgrad 0,3 bis 1,5 Gew.-%, bevorzugt 0,4 bis 1,2 Gew.-%, besonders bevorzugt 0,4 bis 1,0 Gew.-% beträgt, bezogen auf die Mischung.

Wird die Mischung der Copolyolefin-Elastomere als Dryblend, also ohne Homogenisierung in der Schmelze, verwendet, so ist zumindest ein Teil der Komponenten bereits säuremodifiziert, z.B. in einem solchen Maße, dass der Modifizierungsgrad des gesamten Dryblends 0,3 bis 1,5 Gew.-%, bevorzugt 0,4 bis 1,2 Gew.-%, besonders bevorzugt 0,4 bis 1,0 Gew.-% beträgt. Gegebenenfalls kann ein solches Dryblend zusätzlich noch in der Schmelze homogenisiert werden.

Die Auswahl der Polyamidformmasse erfolgt aufgrund der Sauerstoffbarriere (vor allem bei hoher Luftfeuchtigkeit), des Gelboflex-Werts und des Kerbschlags (vor allem bei tiefer Temperatur). Als Kriterium für die Zähigkeit kommt auch noch die Reißdehnung in Frage. Somit lässt sich die erfindungsgemäße Formmasse optimal an vorherrschende äußere Bedingungen bzw. Sollanforderungen anpassen bzw. abstimmen.

In einer bevorzugten Ausführungsform können der Polyamid-Zusammensetzung 0,2 bis 4 Gew.-% Zusatzstoffe hinzugefügt werden. Dabei beträgt weiter bevorzugt die Menge jedes einzelnen Zusatzstoffes maximal 3 Gew.-%.

Der Zusatzstoff ist bevorzugt ausgewählt aus der Gruppe bestehend aus anorganischen Stabilisatoren, organischen Stabilisatoren, Gleitmitteln, Farb- und Markierungsstoffen, anorganischen Pigmenten, organischen Pigmenten, Antistatika, Leitfähigkeitsadditiven, Russ, Graphit, Kohlenstoffnanoröhrchen, optischen Aufhellern, niedermolekularen Verträglichkeitsvermittlern, teilchenförmige Füllstoffen, insbesondere nanoskaligen Füllstoffen, wie z.B. Mineralen mit einer Partikelgröße von maximal 100 nm oder unmodifizierten oder modifizierten, natürlichen oder synthetischen Phyllosilicaten oder Mischungen davon.

Als Stabilisatoren bzw. Alterungsschutzmittel können in den erfindungsgemäßen Polyamid-Zusammensetzungen, z.B. Antioxidantien, Antiozonantien, Lichtschutzmittel, UV-Stabilisatoren, UV-Absorber oder UV-Blocker eingesetzt werden.

Die teilchenförmigen Füllstoffe werden bevorzugt ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Carbonfasern, gemahlenem oder gefälltem Calciumcarbonat, Kalk, Feldspat, Bariumsulfat, Glaskugeln, Hohlglaskugeln, hohlkugeligen Silikatfüllstoffen, synthetischen Schichtsilikaten, natürlichen Schichtsilikaten und Mischungen hiervon.

Die teilchenförmigen Füllstoffe können oberflächenbehandelt sein. Dies kann mit einem geeigneten Schlichte- oder Haftvermittlersystem geschehen. Dazu können z.B. Systeme auf Basis von Fettsäuren, Wachsen, Silanen, Titanaten, Polyamiden, Urethanen, Polyhydroxyethern, Epoxiden, Nickel respektive Kombinationen oder Mischungen davon verwendet werden.

Als Phyllosilicate können in den erfindungsgemäßen Polyamid-Zusammensetzungen, z.B. Kaoline, Serpentine, Talkum, Glimmer, Vermiculite, Muscovite, Illite, Smectite, Saponite, Montmorillonit, Hectorit, Doppelhydroxide oder Gemische davon eingesetzt werden. Die Schichtsilikate können oberflächenbehandelt (modifiziert), aber auch unbehandelt (unmodifiziert) sein.

Als Antistatika und/oder Leitfähigkeitsadditive können in den erfindungsgemäßen Polyamid-Zusammensetzungen z.B. Russ und/oder Kohlenstoffnanoröhrchen, auch Kohlenstoffnanofibrillen genannt, eingesetzt werden.

Die Verwendung von Russ kann z.B. der Schwarzfärbung der Polyamid-Zusammensetzungen dienen.

Eine bevorzugte Ausführungsform der thermoplastischen Polyamidformmasse sieht vor, dass der molare Anteil an Isophthalsäure im Copolyamid MXD6/MXDI, bezogen auf die Gesamtheit der Disäuren Isophthalsäure und Adipinsäure, 1 bis 20 mol-%, bevorzugt 2 bis 15 mol-%, besonders bevorzugt 2 bis 12 mol-% beträgt. Weiter ist bevorzugt, dass das mindestens eine säuremodifizierte Copolyolefin-Elastomer oder das mindestens eine säuremodifizierte Blend mehrerer Copolyolefin-Elastomeren aus monomeren Einheiten zusammengesetzt ist, die ausgewählt sind aus der Gruppe bestehend aus Ethylen d), Propylen e) und But-1-en f), wobei bevorzugt die zuvor genannten Monomere in folgenden molaren Anteilen verwendet werden:
d) Ethylen: 65-90 mol-%, bevorzugt 65-87 mol-%, besonders bevorzugt 71-84 mol-%,
e) Propylen: 8-33 mol-%, bevorzugt 10-25 mol-%, besonders bevorzugt 12-20 mol-%, sowie
f) But-1-en: 2-25 mol-%, bevorzugt 3-20 mol-%, besonders bevorzugt 4-15 mol-%, ganz besonders bevorzugt 4-9 mol-%, und wobei sich die Komponenten d), bis f) zu 100 mol-% addieren.

Gemäß dieser Ausführungsform kann somit vorgesehen sein, dass das Copolyolefin-Elastomer die genannten Monomere d) bis f) in den angegebenen bevorzugten molaren Anteilen enthält, jedoch ist ebenso die Möglichkeit umfasst, dass mehrere Copolyolefin-Elastomere gemischt werden, die jeweils zwei der Monomere d) bis f), d.h. d) und e), d) und f) oder e) und f), enthalten, so dass in der Mischung die Monomere d) bis f) in den bevorzugten molaren Anteilen vorliegen. Besonders bevorzugt besteht die Mischung aus einem Copolyolefin-Elastomer der Monomere d) und e) und einem Copolyolefin-Elastomer der Monomere d) und f), so dass in der Mischung die Monomere d) bis f) in den bevorzugten molaren Anteilen vorliegen.

Weiter ist es vorteilhaft, dass die Säuremodifikation des Copolyolefin-Elastomeren oder des Blends mehrer Copolyolefin-Elastomerer durch Pfropfen mit ungesättigten Carbonsäuren und/oder ungesättigten Carbonsäurederivaten, bevorzugt einem Carbonsäurederivat ausgewählt aus der Gruppe bestehend aus ungesättigten Carbonsäureestern und ungesättigten Carbonsäureanhydriden, insbesondere mit einer ungesättigten Carbonsäure ausgewählt aus der Gruppe bestehend aus Acrylsäure, Methacrylsäure, alpha-Ethylacrylsäure, Maleinsäure, Fumarsäure, Itaconsäure, Citraconsäure, Aconitsäure, Tetrahydrophthalsäure und/oder Butenylsuccinsäure, erfolgt, d.h. dass das Copolyolefin-Elastomer aufgepfropfte ungesättigte Carbonsäuren und/oder ungesättigte Carbonsäurederivate im Molekül enthält. Die Bedingungen, unter denen die Pfropfung des Copolyolefin-Elastomers abläuft, sind dem Fachmann hinlänglich bekannt.

Vorteilhafte Modifizierungsgrade, also die Gewichtsanteile der ungesättigten Carbonsäuren und/oder ungesättigten Carbonsäurederivate am Copolyolefin-Elastomeren oder am Blend mehrer Copolyolefin-Elastomerer, liegen dabei bei 0,3 bis 1,5 Gew.-%, bevorzugt bei 0,4 bis 1,2 Gew.-%, besonders bevorzugt bei 0,4 bis 1,0 Gew.-%.

Eine besonders bevorzugte Ausführungsform der Erfindung sieht vor, dass die relative Viskosität des Copolyamids MXD6/MXDI, gemessen in 0,5 gew.-%-iger m-Kresollösung bei 20°C, 1,40 bis 1,80, bevorzugt 1,46 bis 1,73, besonders bevorzugt 1,51 bis 1,69, ganz besonders bevorzugt 1,53 bis 1,66 beträgt.

Bevorzugt besitzt das Copolyamid MXD6/MXDI maximal 70 meq/kg, besonders bevorzugt 5 bis 50 meq/kg, ganz besonders bevorzugt 10 bis 29 meq/kg Aminoendgruppen. Bevorzugt wird ein Copolyamid MXD6/MXDI mit 5 bis 50 meq/kg Aminoendgruppen mit Copolyolefin-Elastomeren oder einem Blend mehrer Copolyolefin-Elastomerer mit einem Modifizierungsgrad von 0,4 bis 1,2 Gew.-% kombiniert.

Besonders bevorzugt wird ein Copolyamid MXD6/MXDI mit 10 bis 29 meq/kg Aminoendgruppen mit Copolyolefin-Elastomeren oder einem Blend mehrer Copolyolefin-Elastomerer mit einem Modifizierungsgrad von 0,4 bis 1,0 Gew.-% kombiniert.

Besonders gute mechanische Eigenschaften können erzielt werden, wenn
a) der Gewichtsanteil des Copolyamids an der Polyamidformmasse 73 bis 87 Gew.-%, bevorzugt 75 bis 85 Gew.-%, besonders bevorzugt 77 bis 83 und/oder
b) der Gewichtsanteil des mindestens einen säuremodifizierten Copolyolefin-Elastomeren an der Polyamidformmasse oder des mindestens einen säuremodifizierten Blends mehrer Copolyolefin-Elastomerer an der Polyamidformmasse 13 bis 27 Gew.-%, bevorzugt 15 bis 25 Gew.-%, besonders bevorzugt 17 bis 23 Gew.-% beträgt.

Die erfindungsgemäße Polyamidformmasse zeichnet sich insbesondere dadurch aus, dass neben den Copolymeren a) und b) keine weiteren Polymere und/oder Copolymere enthalten sind.

Die erfindungsgemäße Polyamidformmasse ist nicht transparent.

In einer alternativen Ausführungsform besteht die erfindungsgemäße Polyamidformmasse aus den Bestandteilen a) bis c), wobei unter c) erfindungsgemäß keine weiteren Polymere verstanden werden.

Zur Herstellung der erfindungsgemäßen Polyamidformmasse werden die Komponenten a) und b), gegebenenfalls die Komponenten a) bis c), im schmelzeförmigen Zustand gemischt. Dies geschieht auf üblichen Compoundiermaschinen, wie z.B. ein- oder zweiwelligen Extrudern oder Schneckenknetern. Die Komponenten werden dabei einzelnen in den Einzug dosiert oder in Form eines Dryblends zugeführt.

Zur Dryblendherstellung werden die getrockneten Granulate und gegebenenfalls weitere Additive (Zusatzstoffe) vermischt. Diese Mischung wird mittels eines Taumelmischers, Röhnradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 220 bis 300 °C und einer eingestellten Temperatur der Einzugszone von 70 bis 120 °C. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 bis 24 Stunden bei 80 bis 120 °C unter Stickstoff oder im Vakuum auf einen Wassergehalt von unter 0,1 Gew.-%, bevorzugt von unter 0,05 Gew.-% getrocknet.

Erfindungsgemäß wird ebenso ein opaker, mehrschichtiger Behälter, bereitgestellt, bei dem mindestens eine Schicht aus einer erfindungsgemäßen, im Vorangehenden beschriebenen Formmasse hergestellt ist. Bei dieser Schicht kann es sich um eine Zwischenschicht oder um die Innenschicht handeln. In dem Behälter können auch mehrere Polyamidformmassenschichten enthalten sein. Bevorzugt bildet die Polyamidformmassenschicht die innerste Schicht des Behälters, d.h. die Schicht, die direkt den Innenraum des Behälters abgrenzt. Die Innenschicht steht somit in direktem Kontakt zum Füllgut. Der bevorzugte Typ dieses Behälters ist somit beispielsweise ein Vorratsgefäß, Fass, Kanister, Flasche oder Rohr oder ähnliches. Bevorzugt handelt es sich um starre Behälter. Bezüglich seiner geometrischen Abmessungen ist der Behälter nicht beschränkt, so fallen z.B. Kanister, Tanks oder ähnliche abschließbare Gefäße, jedoch auch Rohre, erfindungsgemäß unter den Begriff "Behälter".

Bevorzugt besitzt der Behälter drei bis sieben Schichten.

Bevorzugt besitzt der Behälter mindestens eine Schicht aus einem Polyolefin.

Der Begriff Polyolefin umfasst in diesem Zusammenhang neben Homopolyolefinen auch Copolyolefine, gepfropfte Polyolefine, gepfropfte Copolyolefine, Ionomere und Copolymere aus Olefinen mit Acrylsäure, Acrylsäurederivaten (z.B. Methacrylsäure, Acrylnitril, Methacrylsäuremethylester, Methacrylsäurebutylester, Glycidylmethacrylat ), Vinylacetat, Maleinsäureanhydrid, weiteren Olefinen und/oder Styrol.

Die bevorzugten Schichtdicken der mindestens einen Schicht des Behälters, die aus der erfindungsgemäßen Formmasse hergestellt ist, betragen dabei 15 bis 800 µm, bevorzugt 20 bis 500 µm, besonders bevorzugt 25 bis 250 µm, ganz besonders bevorzugt 30 bis 150 µm.

Durch die Verwendung der erfindungsgemäßen Formmasse zur Herstellung von mindestens einer Schicht des Behälters können dem Behälter überraschenderweise gleichzeitig gute mechanische Eigenschaften wie auch eine sehr gute Sauerstoffbarriere verliehen werden.

Bevorzugte Wandstärken des Behälters, d.h. die Gesamtheit aller Schichten, aus denen der Behälter gebildet ist, betragen dabei 500 µm bis 10 mm, bevorzugt 600 µm bis 6 mm, besonders bevorzugt 700 µm bis 3 mm.

Bezüglich der erfindungsgemäßen Behälter gibt es hinsichtlich des Fassungsvermögens keine besondere bevorzugte Grenze, die oben diskutierten vorteilhaften Effekte kommen jedoch insbesondere bei einem Fassungsvermögen von 0,5 bis 220 1, bevorzugt von 0,5 bis 80 1, weiter bevorzugt von 0,75 bis 20 1, besonders bevorzugt von 1 bis 5 1 zum Tragen.

Bei Behältern mit einem Volumen von 1 bis 5 1 beträgt die Wandstärke bevorzugt 700 µm bis 2,5 mm, besonders bevorzugt 900 µm bis 1,8 mm. Die Schichtdicke der mindestens einen Schicht, die aus der erfindungsgemäßen Formmasse hergestellt ist, beträgt bei diesen Behältern bevorzugt 25 µm bis 250 µm, besonders bevorzugt 35 µm bis 120 µm.

Bei Behältern mit einem Volumen von 80 bis 220 1 beträgt die Wandstärke bevorzugt 2,5 mm bis 10 mm, besonders bevorzugt 2,5 mm bis 6 mm. Die Schichtdicke der mindestens einen Schicht, die aus der erfindungsgemäßen Formmasse hergestellt ist, beträgt bei diesen Behältern bevorzugt 80 µm bis 800 µm, besonders bevorzugt 80 µm bis 400 µm.

Die Wandstärke, d.h. die Gesamtheit aller Schichten, aus denen der Behälter gebildet ist, und die Schichtdicke der mindestens einen Schicht, die aus der erfindungsgemäßen Formmasse hergestellt ist, wird an einem Schnitt durch den Behälter in halber Höhe gemessen, u.z. an vier Stellen welche jeweils 90° voneinander entfernt sind. Bei eckigen Behältern liegen diese vier Stellen vorzugsweise in der Mitte der Seitenflächen. Die Wandstärke kann an diesen Stellen direkt oder mittels eines Mikrotomschnitts bestimmt werden. Die Schichtdicke der mindestens einen Schicht, die aus der erfindungsgemäßen Formmasse hergestellt ist, wird mittels eines Mikrotomschnitts bestimmt. Die Messung erfolg an drei Behältern. Bei den angegebenen Werten handelt es sich um das arithmetische Mittel dieser 12 Messwerte.

Beispiele für den Schichtaufbau eines Behälters sind:
3-Schicht-Behälter:
   PO/HV/PA
   PO+Regranulat/HV/PA
4-Schicht-Behälter:
   PO/Regranulat/HV/PA
   PO/PO+Regranulat/HV/PA
5-Schicht-Behälter:
   PO/Regranulat/PO/HV/PA
   PO/HV/PA/HV/PO
6-Schicht-Behälter:
   PO/Regranulat/HV/PA/HV/PO
   PO/Regranulat/HV/PA/HV/PO
7-Schicht-Behälter:
   PO/HV/PA/HV/PO/HV/PA
   PO/PO+Regranulat/HV/PA/HV/PO+Regranulat/PO
   PO/Regranulat/HV/PA/HV/Regranulat/PO
   PO Polyolefin
   HV Haftvermittler
   PA erfindungsgemässe Polyamidformmasse

Zwischen einer Polyolefinschicht und einer Polyamidschicht wird vorzugsweise immer eine Haftvermittlerschicht verwendet. Als Haftvermittler dienen dabei die handelsüblichen Haftvermittler oder Haftvermittlerkonzentrate. Bei Behältern bis zu 20 l kann der Haftvermittler auch in die Polyolefinschicht eingemischt werden, wobei dessen Anteil an dieser Schicht dann 10 bis 50 Gew.-%, bevorzugt 15 bis 25 Gew.-% beträgt.

Jede Polyolefinschicht, die außen liegt oder eingebetet ist, kann Regranulat enthalten, und zwar bis zu 70 Gew.-%, bevorzugt bis zu 50 Gew.-%, besonders bevorzugt bis zu 40 Gew.-%. Unter Regranulat sind dabei die bei der Behälterproduktion anfallenden Materialreste, wie z.B. Anfahrmaterial, Butzen oder misslungene Behälter zu verstehen, welche vor der Zugabe zerkleinert werden. Das Regranulat kann auch als eigene Schicht verwendet werden.

Die erfindungsgemäßen Behälter zeichnen sich durch eine extrem hohe mechanische Stabilität aus, was anhand eines Testversuchs verdeutlicht wird. Dabei wird der erfindungsgemäße Behälter mit einem Ethylenglykol-Wasser-Gemisch im Volumenverhältnis von 1:2 gefüllt und 24 h bis 48 h bei -20 °C gelagert. Die erfindungsgemäßen Behälter, die mit einem derartigen Lösungsmittelgemisch gefüllt und temperiert sind, brechen jedoch überraschenderweise bei einem Fall aus 1,8 m, bevorzugt aus 2,0 m, besonders bevorzugt aus 2,2 m Höhe nicht.

Verwendungszwecke der erfindungsgemäßen Behälter sind insbesondere die Herstellung von Behältern für Agrochemikalien (z.B. Herbizide, Pestizide, Fungizide, Düngemittel), Industriechemikalien, industrielle Vor - und Zwischenprodukte, kosmetische Vorprodukte oder Erzeugnisse (z.B. Lösungsmittel, Duftstofflösungen, Mascara, Nagellack), pharmazeutische Vorprodukte oder Erzeugnisse, und/oder Vorprodukte für die Lebensmittelindustrie (z.B. Geschmacksstoffe, Zusätze).

Bei Agrochemikalien handelt es sich um Behälter für Endverbraucher. Bei Industriechemikalien um Behälter für Endverbraucher und den Business-to-Business-Bereich. Bei den anderen Verwendungen um Behälter für den Business-to-Business-Bereich.

Die bevorzugte Anwendung der erfindungsgemäßen Polyamidformmassen sind durch Extrusionsblasformen bzw. Spritzstreckblasformen hergestellte Behälter (EBM- bzw. ISBM-Behälter) mit einem Volumen von 0,5 1 bis 220 1. Die Polyamidformmassenschicht kann dabei als Zwischenschicht oder Innenschicht verwendet werden. Es können auch mehrere Polyamidformmassenschichten enthalten sein.

Behälter mit einem Volumen von 0,5 1 bis 20 1 werden über Extrusionsblasformen oder Spritzstreckblasformen hergestellt. Größere Behälter werden bevorzugt mittels Extrusionsblasformen gefertigt.

Die Verarbeitbarkeit zu Flachfolien und deren Eigenschaften sind für die Anwendung der erfindungsgemässen Polyamidformmassen sehr relevant, da die mindestens eine Schicht aus der erfindungsgemässen Polyamidformmasse in dem Behälter, je nach Behältergrösse nur Foliendicke erreichen kann.

Die vorteilhaften Eigenschaften, die mit der erfindungsgemäßen Formmasse einhergehen, werden anhand der nachfolgenden Beispiele weiter verdeutlicht, ohne die Erfindung hierauf zu beschränken. Die in den Tabellen 2 bis 6 verwendeten Verbindungen sind in der nachfolgenden Tabelle 1 angegeben.

Die Wasserdampfdurchlässigkeit der erfindungsgemässen Polyamidformmasse der Beispiele 1, 2 und 4 betragen (gemessen an Flachfolien der Dicke 50 µm bei 23 °C und 85 % relativer Feuchte):

| | | |
|---|---|---|
| Beispiel 1 | 6,5 | g/m² d |
| Beispiel 2 | 6,4 | g/m² d |
| Beispiel 4 | 6,7 | g/m² d |

Zur Prüfung der Polyamid-Formmassen werden folgende Messvorschriften verwendet.

### Relative Viskosität

ISO 307
0,5 Gew.-%-ige m-Kresollösung
bzw. für PA 6 1,0 Gew.-%-ige Lösung in 96 % -iger Schwefelsäure
Temperatur 20 °C
Berechnung der relativen Viskosität (RV) nach RV = t/t₀ in Anlehnung an Abschnitt 11 der Norm.

### Schmelzpunkt

ISO-Norm 11357-1/-2
Granulat
Die Differential Scanning Calorimetry (DSC) wurde mit Aufheizrate von 20 K/min durchgeführt.
Als Schmelzpunkt wird die Temperatur am Peakmaximum angegeben.

### Aminoendgruppenbestimmung

Für die Bestimmung der Aminoendgruppen wird das Polyamid in m-Kresol heiß gelöst und mit Isopropanol versetzt. Der Gehalt an Aminoendgruppen wird durch potentiometrische Titration mit Perchlorsäure ermittelt.

### Zug-E-Modul:

ISO 527 mit einer Zuggeschwindigkeit von 1 mm/min
ISO-Zugstab, Norm: ISO/CD 3167, Typ A1, 170 x
20/10 x 4 mm, Temperatur 23 °C

### Reißdehnung:

ISO 527 mit einer Zuggeschwindigkeit von 50 mm/min
ISO-Zugstab, Norm: ISO/CD 3167, Typ A1, 170 x
20/10 x 4 mm, Temperatur 23 °C

### Schlagzähigkeit nach Charpy:

ISO 179/*eU
ISO-Prüfstab, Norm: ISO/CD 3167, Typ B1, 80 x 10 x 4 mm, Temperatur 23 °C bzw. -30 °C
* 1 = nicht instrumentiert, 2 = instrumentiert

### Kerbschlagzähigkeit nach Charpy:

ISO 179/*eA
ISO-Prüfstab, Norm: ISO/CD 3167, Typ B1, 80 x 10 x 4 mm, Temperatur 23 °C bzw. -30 °C
* 1 = nicht instrumentiert, 2 = instrumentiert

### Sauerstoffbarrieremessung

ASTM D 3985-5
Flachfolie, Dicke 50 µm
Temperatur und relative Feuchte entsprechend der Angabe in den Tabellen
Messgerät Mocon OX-Tran 2/20 der Firma Mocon. Die Kalibrierung des Messgerätes wird mit einer Polyester Kalibrierfolie "Juliett" mit 0,95 mil (24,13 µm) Dicke der Firma Mocon durchgeführt.
Die Messung erfolgt im Trägergasverfahren.

### Bestimmung der Wasserdampfdurchlässigkeit

### DIN 53122-1

Flachfolie, Dicke 50 µm, Durchmesser ca. 90 cm Prüfklima 23 °C, 85 % relative Luftfeuchtigkeit Eine Aluminiumschale, die mit ca. 150 g Silicagel als Absorptionsmittel gefüllt ist, wird durch die Probe mittels eines verschraubten Klemmrings verschlossen und in den Exsikator eingesetzt. Das Wasserdampfvolumen, das durch die Prüffläche der Probenoberfläche hindurchtritt und vom Absorptionsmittel aufgenommen wird, wird aus der Massezunahme der alle 24 h gewogenen Schale bestimmt. Die Massezunahme wird über 28 Tage hinweg verfolgt.

### Gelboflex-Test

ASTM F 392
Flachfolie, DIN A4, Dicke 50 µm
Hub 155 mm
Verdrehungswinkel 440 °
Geschwindigkeit 45 Zyklen/min
Temperatur 23 °C

Messgerät Gelbo Flex Tester Model G0002 der Firma IDM Instruments. Die Messung erfolgt bei 900 Zyklen. Zur Zählung der in der Folie entstandenen Löcher wird die geflexte Folie auf ein Filterpapier gelegt und beides mit einem Rahmen auf einer Lochplatte fixiert. Die Lochplatte wird mit einem Wasserstrahlvakuum beaufschlagt und anschließend auf der Folie mit einem Schwamm oder Pinsel Tinte verteilt. Die Löcher werden als Farbmarkierungen auf dem Filterpapier sichtbar und können gezählt werden. Die Anzahl der Löcher wird pro m² angegeben. Der in den Tabellen angegebene Wert stellt den arithmetischen Mittelwert aus 5 Messungen dar.

### Falltest

ADR/RDI 2009 Abschnitt 6.1
3-Schicht-Flasche mit folgenden Schichtdicken von Aussen nach Innen 1350/40/65 µm und einem Volumen von 1 l
Füllgut Wasser/Ethylenglykol 2/1
Temperatur -20 °C
Die Flaschen (10 Stück pro Fallhöhe) werden 24 bis 48 h bei -18 °C gelagert und unmittelbar nach der
Herausnahme geprüft. Um die Fallhöhe zu bestehen, müssen alle 10 Flaschen nach dem Test noch dicht sein.

### Bestimmung der Lösungsmittelbarriere

3-Schicht-Flasche mit folgenden Schichtdicken von Aussen nach Innen 1350/40/65 µm und einem Volumen von 1 l
Füllgut N-Methylpyrrolidon
Temperatur 40 °C
Lagerungsdauer 60 Tage

Die Lagerung erfolgt in einem Umlufttrockenschrank in einem gut belüftetem Raum. Es werden jeweils 5 Flaschen geprüft. Der Gewichtsverlust wird nach 30, 40, 50 und 60 Tagen bestimmt.

Die Prüfkörper für die Zug- und Schlagprüfungen wurden auf einer Spritzgussmaschine der Firma Arburg, Modell Allrounder 420 C 1000-250 hergestellt. Dabei wurden aufsteigende Zylindertemperaturen von 265 °C bis 285 °C verwendet. Die Formtemperatur betrug 80 °C. Die Prüfkörper wurden in trockenem Zustand verwendet, dazu wurden sie nach dem Spritzguss mindestens 48 h bei Raumtemperatur in trockener Umgebung, d.h. über Silicagel gelagert.

Flachfolienherstellung (Dicke 50 µm) erfolgte auf einer Collin Flachfolienanlage mit einer 3-Zonenschnecke (Durchmesser 30 mm) bei Zylindertemperaturen von 240 bis 260 °C und einer Kopf- und Düsentemperatur von jeweils 260 °C. Die Kühlwalzentemperatur betrug 15 °C bei einer Werkzeugbreite von 300 mm und einer Werkzeugaustrittsspaltmasse von 0,7 mm. Die 50 µm dicken Flachfolien sind transluzent.

Die Herstellung der 3-Schicht-Flaschen erfolgte auf einer Bekum Doppelstation-Blasanlage mit drei Extrudern. Beim Extruder für die erfindungsgemäße Polyamidformmasse wurden Zylindertemperaturen von 245/255/255 °C und eine Düsentemperatur von 245 °C eingestellt. Für die Verarbeitung des schlagzähmodifizierten PA 6 wurden Zylindertemperaturen von 245/245/245 °C und eine Düsentemperatur von 235 °C verwendet. Die anderen Extruder wurden entsprechend den Empfehlungen der Materialhersteller betrieben. Die Formtemperatur betrug 20 °C. Das Flaschengewicht betrug 105 g.

### Schichtstruktur der Flasche:

Außenschicht/HV/Innenschicht
mit folgenden Schichtdicken 1350/40/65 µm.

Als Außenschicht wurde entweder eine Mischung aus HDPE (65 Gew.-%) und Regranulat (35 Gew.-%) oder HDPE allein (100 Gew.-%) verwendet.

Als Innenschicht wurde die erfindungsgemäße Polyamidformmasse aus Beispiel Nr. 2, ein schlagzähmodifiziertes Polyamid 6 oder EVOH eingesetzt.
HDPE: Typ HDPE B5823 von Sabic
   (MFI 23 bei 190 °C und 21,6 kg)
HV: Typ Admer NF 408 E von Mitsui
   (MFI 1,6 bei 190 °C und 2,16 kg)
PA 6, schlagzähmodifiziert:
   80 Gew.-% PA 6 (RV 2,75, in Schwefelsäure)
   20 Gew.-% Tafmer MC 201
   (Sauerstoffdurchlässigkeit bei 23 °C:
   50 % rF 50 ccm/m² d bar
   85 % rF 80 ccm/m² d bar
   Wasserdampfdurchlässigkeit bei 23 °C, 85 % rF: 13 g/m² d)

### EVOH: Typ EVAL F 101 B von Kuraray

(32 mol-% PE, MFI 1,6 bei 190 °C und 2,16 kg)

### Herstellungsbeispiel für die Polyamid-Zusammensetzungen

Im Folgenden wird die Herstellung einer erfindungsgemäßen PA-Formmasse an Hand der Formmasse des Beispiels Nr. 2 erläutert, die weiteren Beispiele und Vergleichsbeispiele wurden analog hergestellt:

Die Formmasse wurde auf einem Zweiwellenextruder der Firma Werner & Pfleiderer Typ ZSK 25 hergestellt. Zur Dryblendherstellung werden die getrockneten Granulate (Copolyamid und Copolyolefin) vermischt. Diese Mischung wird mittels eines Taumelmischers, 30 Minuten lang homogenisiert. Das Dryblend wurde mittels einer Waage in den Einzug dosiert.

Die Temperatur des ersten Zylinders wurde auf 100 °C eingestellt, diejenige der restlichen Zylinder aufsteigend von 230 bis 300 °C. Es wurde eine Drehzahl von 300 U/min und ein Durchsatz von 15 kg/h verwendet und atmosphärisch entgast. Die Stränge wurden im Wasserbad abgekühlt, geschnitten und das erhaltene Granulat bei 120 °C für 24 h auf einen Wassergehalt unter 0,1 Gew.-% getrocknet.

Die Tabellen 2 und 3 zeigen erfindungsgemäße Beispiele, wobei gemäß Tabelle 3 die Komponente b) aus zwei Olefincopolymeren gemischt wird.

Die Tabellen 4 bis 6 enthalten Vergleichsbeispiele. Tabelle 4 zeigt Vergleichsbeispiele mit einem zu geringen bzw. zu hohen Anteil an Komponente b). Die Tabellen 5 und 6 sind nach dem eingangs zitierten Stand der Technik gearbeitet.

Tabelle 7 fasst die Ergebnisse des Falltests und der Bestimmung der Lösungsmittelbarriere zusammen.

Bei den Beispielen 1 bis 11 handelt es sich um erfindungsgemäße Beispiele mit Polyamidformmassen aus einem Copolyamid MXD6/MXDI und einem säuremodifizierten Copolyolefin-Elastomeren (Tabelle 2) bzw. einem säuremodifizierten Blend mehrerer Copolyolefin-Elastomerer (Tabelle 3). Sie zeigen tiefe Sauerstoffdurchlässigkeiten bei gleichzeitig geringer Anfälligkeit zur Lochbildung im Gelboflex-Test. Auch die Kerbschlagzähigkeiten sind hoch.

Die Vergleichsbeispiele 12 und 13 zeigen, dass 10 Gew.-% des säuremodifizierten Copolyolefin-Elastomeren (B1) im PA MXD6/MXDI noch nicht ausreichen, da die daraus hergestellte Folie im Gelboflex-Test zerstört wird. Desweiteren ergeben sich nur geringe Kerbschlagzähigkeiten. Andererseits sind 30 Gew.-% des säuremodifizierten Copolyolefin-Elastomeren (B1) im PA MXD6/MXDI zuviel (Vergleichsbeispiel 14), da die Formmasse dann so viele Gelteilchen aufweist, dass keine Folie mehr herstellbar ist.

Die Tabellen 5 und 6 (Vergleichsbeispiele 15 bis 19) zeigen weitere an nicht erfindungsgemäßen Polyamidformmassen erhaltene Ergebnisse. Dabei sind die Polyamidformmassen der Tabelle 5 nach EP 1 752 492 A1 und diejenigen der Tabelle 6 nach EP 1 942 296 A1 gearbeitet.

Die in den Vergleichsbeispielen 15 und 16 nach EP 1 752 492 A1 hergestellten Formmassen weisen zu viele Gelteilchen auf, so dass keine Folie mehr herstellbar ist (Vergleichsbeispiel 15) oder sie besitzen eine zu hohe Sauerstoffdurchlässigkeit und zu geringe Zähigkeit (Vergleichsbeispiel 16).

Die in den Vergleichsbeispielen 17 bis 19 nach EP 1 942 296 A1 hergestellten Formmassen weisen allesamt zu hohe Sauerstoffdurchlässigkeiten auf.

In Tabelle 7 sind die Ergebnisse der Falltests mit gefüllten und gekühlten 3-Schicht-Flaschen wiedergegeben. Die Flaschen mit der Innenschicht aus der erfindungsgemäßen Formmasse des Beispiels Nr. 2 bestehen einen Fall aus 2,20 m Höhe und zeigen damit das beste Ergebnis aller getesteten Flaschen.

Die Flaschen mit dem schlagzähmodifizierten Polyamid 6 als Innenschicht bestehen zwar einen Fall aus 1,80 m Höhe, das schlagzähmodifizierte Polyamid 6 hat aber eine wesentlich höhere Sauerstoffdurchlässigkeit als die erfindungsgemäßen Formmassen.

Des weiteren zeigen die Flaschen mit dem schlagzähmodifizierten Polyamid 6 als Innenschicht eine schlechtere Barriere gegenüber N-Methylpyrrolidon als Flaschen mit der erfindungsgemäßen Formmasse des Beispiels Nr. 2 als Innenschicht.

Bei EVOH handelt es sich um ein gängiges Barrierematerial, auch für Flaschen. Flaschen mit EVOH als Innenschicht erreichen nur Fallhöhen von 1,40 m bzw. von weniger als 1,0 m je nach Außenschicht.

**Tabelle 1**

| **Komponenten** | **Beschreibung** | **Funktionalisierung: Art Menge** | **Dichte g/ccm** | **MFR 230 °C 2,16 kg** | **Handelsname** | **Hersteller** |
|---|---|---|---|---|---|---|
| PA MXD6/MXDI (A1) | Copolyamid MXD6/MXDI aus Meta-Xylylendiamin, Adipinsäure und Isophthalsäure, mit 2 Mol% Isophthalsäure, bezogen auf 100 Mol-% Disäure RV 1,63 (gemessen in 0,5 Gew.-%-iger m-Kresollösung bei 20 °C) Schmelzpunkt 234 °C, Aminoendgruppen 19 meq/kg | - - | - | - | - | EMS-CHEMIE AG, Schweiz |
| PA MXD6/MXDI (A2) | Copolyamid MXD6/MXDI aus Meta-Xylylendiamin, Adipinsäure und Isophthalsäure, mit 12 Mol-% Isophthalsäure, bezogen auf 100 Mol% Disäure RV 1,56 (gemessen in 0,5 Gew.-%-iger m-Kresollösung bei 20 °C) Schmelzpunkt 218 °C, Aminoendgruppen 46 meq/kg | - - | - | - | - | EMS-CHEMIE AG, Schweiz |
| PA 610 | Polyamid 610 aus Hexamethylendiamin und Sebazinsäure RV 1,95 (gemessen in 0,5 Gew.-%-iger m-Kresollösung bei 20 °C) | - - | - | - | - | EMS-CHEMIE AG, Schweiz |
| PE-HD | Polyethylen mit hoher Dichte | - - | 0,945 | 15* | Lupolen 4261A | LyondellBasell, Niederlande |
| E/P-E/B-MAH (B1) | Blend aus Ethylen/Propylen-Copolymer und Ethylen/But-1-en-Copolymer im Gewichtsverhältnis 67:33 | Maleinsäureanhydrid 0,6 Gew.-% | 0,875 | 1,3 | Tafmer MC 201 | Mitsui Chemicals, Japan |
| E/P-MAH (B2) | Funktionalisiertes Olefincopolymer aus Ethylen und Propylen | Maleinsäureanhydrid 0,8 Gew.-% | 0,870 | - | Exxelor VA 1810 | Exxon Mobile Chemicals, USA |
| E/B-MAH (B3) | Funktionalisiertes Olefincopolymer aus Ethylen und But-1-en | Maleinsäureanhydrid 0,8 Gew.-% | 0,870 | 1,8 | Tafmer MH 7010 | Mitsui Chemicals, Japan |
| E-MAH (B4) | Olefincopolymer aus Ethylen und Maleinsäureanhydrid | Maleinsäureanhydrid 0,2 Gew.-% | 0,924*** | 1,1** | Admer GT 6 | Mitsui Chemicals, Japan |

| | | | | | | |
|---|---|---|---|---|---|---|
| RV relative Viskosität * MFR 190 °C, 21,6 kg ** MFR 190 °C, 2,16 kg *** getempert 120 °C, 1 h | | | | | | |

**Tabelle 2**

| **Beispiele** | | **Nummer** | | | |
|---|---|---|---|---|---|
| **Komponenten** | **Einheit** | **1** | **2** | **3** | **4** |
| PA MXD6/MXDI (A1) | Gew.-% | 85 | 80 | - | 75 |
| PA MXD6/MXDI (A2) | Gew.-% | - | - | 80 | - |
| E/P-E/B-MAH (B1) | Gew.-% | 15 | 20 | 20 | 25 |

| **Tests** | | | | | |
|---|---|---|---|---|---|
| Zug-E-Modul | MPa | 2700 | 2200 | 2170 | 1990 |
| Reißdehnung | % | 35 | 40 | 70 | 35 |

| Schlagzähigkeit, Charpy | | | | | |
|---|---|---|---|---|---|
| 23°C | kJ/m² | 330 | 350 | 315 | 315 |
| -30 °C | | 90 | 100 | 100 | 100 |

| Kerbschlagzähigkeit, Charpy | | | | | |
|---|---|---|---|---|---|
| 23 °C | kJ/m² | 30 | 75 | 85 | 90 |
| -30 °C | | 10 | 13 | 15 | 15 |

| Sauerstoffdurchlässigkeit | | | | | |
|---|---|---|---|---|---|
| 0%rF,23°C | | 11 | 11 | 12 | 14 |
| 50 % rF, 23 °C | ccm/m² d bar | 4 | 4 | 4 | 5 |
| 85 % rF, 23 °C | | 4 | 5 | 5 | 6 |
| Gelbolflex-Test, 900 Zyklen | Löcher | 238 | 98 | 94 | 63 |

**Tabelle 3**

| **Beispiele** | | **Nummer** | | | | | | |
|---|---|---|---|---|---|---|---|---|
| **Komponenten** | **Einheit** | **5** | **6** | **7** | **8** | **9** | **10** | **11** |
| PA MXD6/MXDI (A1) | Gew.-% | 80 | 80 | - | 80 | 80 | - | 80 |
| PA MXD6/MXDI (A2) | | - | - | 80 | - | - | 80 | - |
| E/P-MAH (B2) | Gew.-% | 16 | 13 | 13 | 10 | 7 | 7 | 4 |
| E/B-MAH (B3) | Gew.-% | 4 | 7 | 7 | 10 | 13 | 13 | 16 |

| **Tests** | | | | | | | | |
|---|---|---|---|---|---|---|---|---|
| Zuq-E-Modul | MPa | 2200 | 2240 | 2200 | 2190 | 2130 | 2210 | 2210 |
| Reißdehnung | % | 45 | 60 | 35 | 35 | 50 | 40 | 40 |

| Schlagzähigkeit, Charpy | | | | | | | | |
|---|---|---|---|---|---|---|---|---|
| 23 °C | kJ/m² | 310 | 305 | 315 | 305 | 305 | 320 | 310 |
| -30 °C | | 100 | 100 | 100 | 100 | 100 | 100 | 100 |

| Kerbschlagzähigkeit, Charpy | | | | | | | | |
|---|---|---|---|---|---|---|---|---|
| 23 °C | kJ/m² | 25 | 40 | 35 | 65 | 75 | 30 | 65 |
| -30 °C | | 10 | 11 | 13 | 13 | 14 | 14 | 13 |

| Sauerstoffdurchlässigkeit | | | | | | | | |
|---|---|---|---|---|---|---|---|---|
| 0 % rF, 23°C | | 11 | 13 | 12 | 13 | 11 | 13 | 13 |
| 50 % rF, 23°C | ccm/m² d bar | 4 | 5 | 4 | 5 | 5 | 4 | 4 |
| 85 % rF, 23°C | | 6 | 6 | 5 | 6 | 5 | 6 | 5 |
| Gelbolflex-Test, 900 Zyklen | Löcher | 138 | 112 | 108 | 115 | 115 | 110 | 138 |

**Tabelle 4**

| **Vergleichsbeispiele** | | **Nummer** | | |
|---|---|---|---|---|
| **Komponenten** | **Einheit** | **12** | **13** | **14** |
| PA MXD6/MXDI (A1) | Gew.-% | 95 | 90 | 70 |
| E/P-E/B-MAH (B1) | Gew.-% | 5 | 10 | 30 |

| **Tests** | | | | |
|---|---|---|---|---|
| Zug-E-Modul | MPa | 3550 | 3110 | 1760 |
| Reißdehnung | % | 8 | 22 | 18 |

| Schlagzähigkeit, Charpy | | | | |
|---|---|---|---|---|
| 23 °C | kJ/m² | 75 | 220 | 285 |
| -30 °C | | 60 | 70 | 100 |

| Kerbschlagzähigkeit, Charpy | | | | |
|---|---|---|---|---|
| 23°C | kJ/m² | 4 | 8 | 80 |
| -30 °C | | 4 | 5 | 16 |

| Sauerstoffdurchlässigkeit | | | | |
|---|---|---|---|---|
| 0 % rF, 23 °C | | 8 | 9 | * |
| 50 % rF, 23 °C | ccm/m² d bar | 3 | 3 | * |
| 85 % rF, 23 °C | | 3 | 4 | * |
| Gelbolflex-Test, 900 Zyklen | Löcher | ** | ** | * |

| | | | | |
|---|---|---|---|---|
| * Zu viele Gelteilchen, daher keine Folie herstellbar ** Folie ist zerrissen | | | | |

**Tabelle 5**

| **Vergleichsbeispiele** | | **Nummer** | |
|---|---|---|---|
| **Komponenten** | **Einheit** | **15** | **16** |
| PE-HD | Gew.-% | 50 | 75 |
| PA MXD6/MXDI (A1) | Gew.-% | 25 | 5 |
| E-MAH (B9) | Gew.-% | 25 | 20 |

| **Tests** | | | |
|---|---|---|---|
| Zug-E-Modul | MPa | 1140 | 825 |
| Reißdehnung | % | 25 | 15 |

| Schlagzähigkeit, Charpy | | | |
|---|---|---|---|
| 23 °C | kJ/m² | 30 | 150 |
| -30 °C | | 19 | 100 |

| Kerbschlagzähigkeit, Charpy | | | |
|---|---|---|---|
| 23 °C | kJ/m² | 10 | 1 |
| -30 °C | | 10 | 9 |

| Sauerstoffdurchlässigkeit | | | |
|---|---|---|---|
| 0 % rF, 23 °C | | * | 2080 |
| 50 % rF, 23 °C | ccm/m² d bar | * | 2043 |
| 85 % rF, 23 °C | | * | 2000 |
| Gelbolflex-Test, 900 Zyklen | Löcher | * | 1495 |

| | | | |
|---|---|---|---|
| * Zu viele Gelteilchen, daher keine Folie herstellbar | | | |

**Tabelle 6**

| **Vergleichsbeispiele** | | **Nummer** | | |
|---|---|---|---|---|
| **Komponenten** | **Einheit** | **17** | **18** | **19** |
| PA 610 | Gew.-% | 75 | 55 | 50 |
| PA MXD6/MXDI (A1) | Gew.-% | 20 | 30 | 30 |
| E/P-E/B-MAH (B1) | Gew.-% | 5 | 15 | 20 |

| **Tests** | | | | |
|---|---|---|---|---|
| Zug-E-Modul | MPa | 2450 | 2165 | 1985 |
| Reißdehnung | % | 30 | 40 | 65 |

| Schlagzähigkeit, Charpy | | | | |
|---|---|---|---|---|
| 23 °C | kJ/m² | 360 | 305 | 285 |
| -30 °C | | 100 | 100 | 100 |

| Kerbschlagzähigkeit, Charpy | | | | |
|---|---|---|---|---|
| 23°C | kJ/m² | 10 | 30 | 55 |
| -30 °C | | 7 | 16 | 19 |

| Sauerstoffdurchlässigkeit | | | | |
|---|---|---|---|---|
| 0 % rF, 23 °C | | 84 | 83 | 73 |
| 50 % rF, 23 °C | ccm/m² d bar | 53 | 50 | 41 |
| 85 % rF, 23 °C | | 60 | 60 | 48 |
| Gelbolflex-Test, 900 Zyklen | Löcher | 432 | 292 | 230 |

**Tabelle 7**

| Falltest an gefüllten und gekühlten 3-Schicht-Flaschen, Zwischenschicht jeweils aus Admer NF 408 E und Barriere gegenüber N-Methylpyrrolidon | | | |
|---|---|---|---|
| Material für Außenschicht | Material für Innenschicht | höchste, bestandene Fallhöhe [m] | Gewichtsverlust bei Lagerung bei 40 °C für 60 Tage [g/d] |
| HDPE + Regranulat | Beispiel Nr. 2 | 2,20 | 0,017 |
| HDPE + Regranulat | PA 6, schlagzähmodifiziert | 1,80 | 0,021 |
| HDPE + Regranulat | EVOH | < 1,00 | - |
| HDPE | EVOH | 1,40 | - |

## Patentansprüche

1. Thermoplastische Polyamidformmasse, enthaltend
a)71 bis 89 Gew.-% eines Copolyamids MXD6/MXDI, wobei der molare Anteil an Isophthalsäure, bezogen auf die Gesamtheit der Disäuren Isophthalsäure und Adipinsäure 1 bis 30-mol-% beträgt,
b)11 bis 29 Gew.-% mindestens eines säuremodifizierten Copolyolefin-Elastomeren oder mindestens eines säuremodifizierten Blends mehrer Copolyolefin-Elastomerer,
c) 0 bis 8 Gew.-% Zusatzstoffe,
wobei neben den Copolymeren a) und b) keine weiteren Polymere und/oder Copolymere enthalten sind und die Komponenten a) bis c) sich zu 100 Gew.-% addieren.

2. Formmasse nach Anspruch 1, **dadurch gekennzeichnet, dass** der molare Anteil an Isophthalsäure im Copolyamid MXD6/MXDI, bezogen auf die Gesamtheit der Disäuren Isophthalsäure und Adipinsäure 1 bis 20 mol-%, bevorzugt 2 bis 15 mol-%, besonders bevorzugt 2 bis 12 mol-% beträgt.

3. Formmasse nach Anspruch 1, **dadurch gekennzeichnet, dass** das Copolyamid MXD6/MXDI maximal 70 meq/kg, bevorzugt 5 bis 50 meq/kg, besonders bevorzugt 10 bis 29 meq/kg Aminoendgruppen besitzt.

4. Formmasse nach einem der vorhergehenden Ansprüche, **dadurch gekennzeichnet, dass** das mindestens eine säuremodifizierte Copolyolefin-Elastomer oder das mindestens eine säuremodifizierte Blend mehrerer Copolyolefin-Elastomeren aus monomeren Einheiten zusammengesetzt ist, die ausgewählt sind aus der Gruppe bestehend aus Ethylen, Propylen und But-1-en, wobei bevorzugt die zuvor genannten Monomere in folgenden molaren Anteilen verwendet werden:
d) Ethylen: 65-90 mol-%, bevorzugt 65-87 mol-%, besonders bevorzugt 71-84 mol-%,
e) Propylen: 8-33 mol,-%, bevorzugt 10-25 mol,-%, besonders bevorzugt 12-20 mol-%, sowie
f) But-1-en: 2-25 mol,-%, bevorzugt 3-20 mol-%, besonders bevorzugt 4-15 mol-%, ganz besonders bevorzugt 4-9 mol-%, und wobei sich die Komponenten d) bis f) zu 100 mol-% addieren.

5. Formmasse nach einem der vorhergehenden Ansprüche, **dadurch gekennzeichnet, dass** der Modifizierungsgrad also der Gewichtsanteil der ungesättigten Carbonsäuren und/oder ungesättigten Carbonsäurederivate am Copolyolefin-Elastomeren oder am Blend mehrer Copolyolefin-Elastomerer, des säuremodifizierten Copolyolefin-Elastomeren oder des mindestens einen säuremodifizierten Blends mehrerer Copolyolefin-Elastomerer 0,3 bis 1,5 Gew.-%, bevorzugt 0,4 bis 1,2 Gew.-%, besonders bevorzugt 0,4 bis 1,0 Gew.-%, bezogen auf das säuremodifizierte Copolyolefin-Elastomere oder das säuremodifizierte Blend mehrer Copolyolefin-Elastomerer beträgt.

6. Formmasse nach einem der vorhergehenden Ansprüche, **dadurch gekennzeichnet, dass** die Säuremodifikation des Copolyolefin-Elastomeren oder des Blends mehrer Copolyolefin-Elastomerer durch Pfropfen mit ungesättigten Carbonsäuren und/oder ungesättigten Carbonsäurederivaten, bevorzugt einem Carbonsäurederivat ausgewählt aus der Gruppe bestehend aus ungesättigten Carbonsäureestern und ungesättigten Carbonsäureanhydriden, insbesondere mit einer ungesättigten Carbonsäure ausgewählt aus der Gruppe bestehend aus Acrylsäure, Methacrylsäure, alpha-Ethylacrylsäure, Maleinsäure, Fumarsäure, Itaconsäure, Citraconsäure, Aconitsäure, Tetrahydrophthalsäure und/oder Butenylsuccinsäure, erfolgt.

7. Formmasse nach einem der vorhergehenden Ansprüche, **dadurch gekennzeichnet, dass** die relative Viskosität des Polyamids MXD6/MXDI, gemessen in 0,5 Gew.%-iger m-Kresollösung bei 20°C, 1,40 bis 1,80, bevorzugt 1,46 bis 1,73, besonders bevorzugt 1,51 bis 1,69, ganz besonders bevorzugt 1,53 bis 1,66 beträgt.

8. Formmasse nach einem der vorhergehenden Ansprüche, **dadurch gekennzeichnet, dass**
a) der Gewichtsanteil des Copolyamids 73 bis 87 Gew.-%, bevorzugt 75 bis 85 Gew.-%, besonders bevorzugt 77 bis 83 und
b) der Gewichtsanteil des mindestens einen säuremodifizierten Copolyolefin-Elastomeren oder des mindestens einen säuremodifizierten Blends mehrer Copolyolefin-Elastomerer 13 bis 27 Gew.-%, bevorzugt 15 bis 25 Gew.%, besonders bevorzugt 17 bis 23 Gew.-%
bezogen auf die Formmasse, beträgt.

9. Mehrschichtiger Behälter, umfassend mindestens eine Schicht, die aus einer Formmasse nach einem der vorhergehenden Ansprüche, hergestellt ist.

10. Behälter nach vorhergehendem Anspruch, **dadurch gekennzeichnet, dass** mindestens die innerste Schicht aus der Formmasse hergestellt ist.

11. Behälter nach einem der beiden vorhergehenden Ansprüche, **dadurch gekennzeichnet, dass** die mindestens eine Schicht, die aus der Formmasse hergestellt ist, eine Schichtdicke von 15 bis 800 µm, bevorzugt 20 bis 500 µm, besonders bevorzugt 25 bis 250 µm, ganz besonders bevorzugt 30 bis 150 µm beträgt.

12. Behälter nach einem der Ansprüche 10 bis 12, **dadurch gekennzeichnet, dass** die Gesamtheit der Schichten eine Gesamtschichtdicke von 500 µm, bis 10 mm, bevorzugt von 600 µm bis 6 mm, besonders bevorzugt von 700 µm bis 3 mm besitzt.

13. Behälter nach einem der Ansprüche 10 bis 13, **dadurch gekennzeichnet, dass** sie gefüllt mit einem Ethylenglykol-Wasser-Gemisch im Volumenverhältnis von 1:2 nach Lagerung bei -20 °C über 24 bis 48 Stunden bei einem Fall aus 1,8 m, bevorzugt aus 2,0 m, besonders bevorzugt aus 2,2 m Höhe nicht brechen.

14. Verwendung eines Behälters nach einem der Ansprüche 10 bis 14 für Agrochemikalien (z.B. Herbizide, Pestizide, Fungizide, Düngemittel), Industriechemikalien, industrielle Vor- und Zwischenprodukte, kosmetische Vorprodukte oder Erzeugnisse (z.B. Lösungsmittel, Duftstofflösungen, Mascara, Nagellack), pharmazeutische Vorprodukte oder Erzeugnisse, und/oder Vorprodukte für die Lebensmittelindustrie.

## Claims

1. Thermoplastic polyamide moulding compound, comprising
a) 71 to 89% by weight of a copolyamide MXD6/MXDI, the molar proportion of isophthalic acid, relative to the total quantity of the diacids, isophthalic acid and adipinic acid, being 1 to 30% by mol,
b) 11 to 29% by weight of at least one acid-modified copolyolefin elastomer or at least one acid-modified blend of a plurality of copolyolefin elastomers,
c) 0 to 8% by weight of additives,
wherein in addition to the copolymers a) and b), no further polymers and/or copolymers are contained, and
components a) to c) adding up to 100% by weight.

2. Moulding compound according to claim 1, **characterised in that** the molar proportion of isophthalic acid in the copolyamide MXD6/MXDI, relative to the total quantity of the diacids, isophthalic acid and adipinic acid, is 1 to 20% by mol, preferably 2 to 15% by mol, particularly preferred 2 to 12% by mol.

3. Moulding compound according to claim 1, **characterised in that** the copolyamide MXD6/MXDI has at most 70 meq/kg, preferably 5 to 50 meq/kg, particularly preferred 10 to 29 meq/kg amino end groups.

4. Moulding compound according to one of the preceding claims, **characterised in that** the at least one acid-modified copolyolefin elastomer or the at least one acid-modified blend of a plurality of copolyolefin elastomers is composed of monomeric units which are selected from the group consisting of ethylene, propylene and but-1-ene, the above-mentioned monomers being used preferably in the following molar proportions:
d) ethylene: 65 - 90% by mol, preferably 65 - 87% by mol, particularly preferred 71 - 84% by mol,
e) propylene: 8 - 33% by mol, preferably 10 - 25% by mol, particularly preferred 12 - 20% by mol, and also
f) but-1-ene: 2 - 25% by mol, preferably 3 - 20% by mol, particularly preferred 4 - 15% by mol, very particularly preferred 4 - 9% by mol, and components d) to f) adding up to 100% by mol.

5. Moulding compound according to one of the preceding claims, **characterised in that** the modification degree i.e. the weight portions of the unsaturated carboxylic acids and/or unsaturated carboxylic acid derivates in the copolyolefin elastomers of the blends of a plurality of copolyolefin elastomers of the acid-modified copolyolefin elastomer or of the at least one acid-modified blend of a plurality of copolyolefin elastomers is 0.3 to 1.5% by weight, preferably 0.4 to 1.2% by weight, particularly preferred 0.4 to 1.0% by weight, relative to the acid-modified copolyolefin elastomer or the acid-modified blend of a plurality of copolyolefin elastomers.

6. Moulding compound according to one of the preceding claims, **characterised in that** the acid modification of the copolyolefin elastomer or of the blend of a plurality of copolyolefin elastomers is effected by grafting with unsaturated carboxylic acids and/or unsaturated carboxylic acid derivatives, preferably a carboxylic acid derivative selected from the group consisting of unsaturated carboxylic acid esters and unsaturated carboxylic acid anhydrides, in particular with an unsaturated carboxylic acid selected from the group consisting of acrylic acid, methacrylic acid, alpha-ethylacrylic acid, maleic acid, fumaric acid, itaconic acid, citraconic acid, aconitic acid, tetrahydrophthalic acid and/or butenylsuccinic acid.

7. Moulding compound according to one of the preceding claims, **characterised in that** the relative viscosity of the polyamide MXD6/MXDI, measured in 0.5% by weight of m-cresol solution at 20°C, is 1.40 to 1.80, preferably 1.46 to 1.73, particularly preferred 1.51 to 1.69, very particularly preferred 1.53 to 1.66.

8. Moulding compound according to one of the preceding claims, **characterised in that**
a) the weight proportion of the copolyamide is 73 to 87% by weight, preferably 75 to 85% by weight, particularly preferred 77 to 83% by weight and
b) the weight proportion of the at least one acid-modified copolyolefin elastomer or of the at least one acid-modified blend of a plurality of copolyolefin elastomers is 13 to 27% by weight, preferably 15 to 25% by weight, particularly preferred 17 to 23% by weight, relative to the moulding compound.

9. Multilayer container comprising at least one layer which is produced from a moulding compound according to one of the preceding claims.

10. Container according to the preceding claim, **characterised in that** at least the innermost layer is produced from the moulding compound.

11. Container according to one of the two preceding claims, **characterised in that** the at least one layer which is produced from the moulding compound has a layer thickness of 15 to 800 µm, preferably 20 to 500 µm, particularly preferred 25 to 250 µm, very particularly preferred 30 to 150 µm.

12. Container according to one of the claims 10 to 12, **characterised in that** the totality of the layers has a total layer thickness of 500 µm to 10 mm, preferably of 600 µm to 6 mm, particularly preferred of 700 µm to 3 mm.

13. Container according to one of the claims 10 to 13, **characterised in that**, filled with an ethylene glycol-water mixture in the volume ratio of 1 : 2 and after storage at -20°C for 24 to 48 hours, with a drop from 1.8 m, preferably from 2.0 m, particularly preferred from 2.2 m height, they do not break.

14. Use of a container according to one of the claims 10 to 14 for agrochemicals (e.g. herbicides, pesticides, fungicides, fertilisers), industrial chemicals, industrial precursor and intermediate products, cosmetic precursor products or products (e.g. solvents, aromatic solutions, mascara, nail polish), pharmaceutical precursor products or products and/or precursor products for the foodstuffs industry.

## Revendications

1. Matière à mouler en polyamide thermoplastique, contenant
a) de 71 à 89 % en poids d'un copolyamide MXD6/MXDI, la proportion molaire d'acide isophtalique, rapportée au total des diacides isophtalique et adipique étant de 1 à 30 % en mole,
b) de 11 à 29 % en poids d'au moins un élastomère de copolyoléfine modifié par acide ou d'au moins un mélange modifié par acide de plusieurs élastomères de copolyoléfine,
c) de 0 à 8 % en poids d'additifs,
outre les copolymères a) et b), aucun autre polymère et/ou copolymère n'y étant contenu et les composants a) à c) s'additionnant pour donner 100 %.

2. Matière à mouler selon la revendication 1, **caractérisée en ce que** la proportion molaire de l'acide isophtalique dans le copolyamide MXD6/MXDI, rapportée au total des diacides isophtalique et adipique, est de 1 à 20 % en mole, de préférence de 2 à 15 % en mole, de façon particulièrement préférée de 2 à 12 % en mole.

3. Matière à mouler selon la revendication 1, **caractérisée en ce que** le copolyamide MXD6/MXDI possède au maximum 70 meq/kg, de préférence de 5 à 50 meq/kg, de façon particulièrement préférée de 10 à 29 meq/kg de groupes terminaux amino.

4. Matière à mouler selon l'une quelconque des revendications précédentes, **caractérisée en ce que** l'au moins un élastomère de copolyoléfine modifié par acide ou l'au moins un mélange modifié par acide de plusieurs élastomères de copolyoléfines est composé d'unités monomères, qui sont choisies parmi le groupe comprenant l'éthylène, le propylène, le but-1-ène, de préférence les monomères mentionnés précédemment étant utilisés dans les proportions molaires suivantes :
d) éthylène : de 65 à 90 % en mole, de préférence de 65 à 87 % en mole, de façon particulièrement préférée de 71 à 84 % en mole,
e) propylène : de 8 à 33 % en mole, de préférence de 10 à 25 % en mole, de façon particulièrement préférée de 12 à 20 % en mole, ainsi que
f) but-1-ène : de 2 à 25 % en mole, de préférence de 3 à 20 % en mole, de façon particulièrement préférée de 4 à 15 % en mole, de façon tout particulièrement préférée de 4 à 9 % en mole, les composants d) à f) s'additionnant pour donner 100 %.

5. Matière à mouler selon l'une quelconque des revendications précédentes, **caractérisée en ce que** le degré de modification, c'est-à-dire la proportion en poids des acides carboxyliques insaturés et/ou des dérivés d'acides carboxyliques insaturés dans l'élastomère de copolyoléfines ou dans le mélange de plusieurs élastomères de copolyoléfines d'élastomères de copolyoléfines modifiés par acide ou l'au moins un mélange modifié par acide de plusieurs élastomères de copolyoléfines est de 0,3 à 1,5 % en poids, de préférence de 0,4 à 1,2 % en poids, de façon particulièrement préférée de 0,4 à 1,0 % en poids, rapporté à l'élastomère de copolyoléfine modifié par acide ou au mélange modifié par acide de plusieurs élastomères de copolyoléfines.

6. Matière à mouler selon l'une quelconque des revendications précédentes, **caractérisée en ce que** la modification acide de l'élastomère de copolyoléfine ou du mélange de plusieurs élastomères de copolyoléfines s'effectue par greffage avec des acides carboxyliques insaturés et/ou avec des dérivés d'acides carboxyliques insaturés, de préférence avec un dérivé d'acide carboxylique choisi parmi le groupe comprenant des esters d'acides carboxyliques insaturés et des anhydrides d'acides carboxyliques insaturés, en particulier avec un acide carboxylique insaturé choisi parmi le groupe comprenant l'acide acrylique, l'acide méthacrylique, l'acide alpha-éthyl-acrylique, l'acide maléique, l'acide fumarique, l'acide itaconique, l'acide citraconique, l'acide aconitique, l'acide tétrahydrophtalique et/ou l'acide butényl-succinique.

7. Matière à mouler selon l'une quelconque des revendications précédentes, **caractérisée en ce que** la viscosité relative du polyamide MXD6/MXDI, mesurée dans une solution de m-crésol à 0,5 % en poids, à 20 °C, est de 1,40 à 1,80, de préférence de 1,46 à 1,73, de façon particulièrement préférée de 1,51 à 1,69, de façon tout particulièrement préférée de 1,53 à 1,66.

8. Matière à mouler selon l'une quelconque des revendications précédentes, **caractérisée en ce que**
a) la proportion en poids du copolyamide est de 73 à 87 % en poids, de préférence de 75 à 85 % en poids, de façon particulièrement préférée de 77 à 83 et
b) la proportion en poids de l'au moins un élastomère de copolyoléfine modifié par acide ou l'au moins un mélange modifié par acide de plusieurs élastomères de copolyoléfine est de 13 à 27 % en poids, de préférence de 15 à 25 % en poids, de façon particulièrement préférée de 17 à 23 % en poids,
rapportées à la matière à mouler.

9. Récipient multicouche comprenant au moins une couche, qui est fabriquée à partir d'une matière à mouler selon l'une quelconque des revendications précédentes.

10. Récipient selon la revendication précédente, **caractérisé en ce qu'**au moins la couche centrale est fabriquée à partir de la matière à mouler.

11. Récipient selon l'une des deux revendications précédentes, **caractérisé en ce que** l'au moins une couche qui est fabriquée à partir de la matière à mouler présente une épaisseur de couche de 15 à 800 µm, de préférence de 20 à 500 µm, de façon particulièrement préférée de 25 à 250 µm, de façon tout particulièrement préférée de 30 à 150 µm.

12. Récipient selon l'une quelconque des revendications 10 à 12, **caractérisé en ce que** l'ensemble des couches possède une épaisseur de couche totale de 500 µm à 10 mm, de préférence de 600 µm à 6 mm, de façon particulièrement préférée de 700 µm à 3 mm.

13. Récipients selon l'une quelconque des revendications 10 à 13, **caractérisés en ce que**, remplis d'un mélange éthylène glycol/eau selon un rapport volumique de 1/2, après un stockage à -20 °C pendant 24 à 48 heures, ne se rompent pas lors d'une chute d'une hauteur de 1,8 m, de préférence d'une hauteur de 2,0 m, de façon particulièrement préférée d'une hauteur de 2,2 m.

14. Utilisation d'un récipient selon l'une quelconque des revendications 10 à 14 pour des produits agrochimiques (p. ex., des herbicides, des pesticides, des fongicides, des engrais), des produits chimiques industriels, des produits industriels primaires ou intermédiaires, des produits cosmétiques primaires ou des produits (p.ex., des dissolvants, des solutions de substances odorantes, des mascaras, des vernis à ongles), des produits pharmaceutiques primaires ou des produits et/ou des produits primaires pour l'industrie alimentaire.
